# EUROPÄISCHE PATENTSCHRIFT

(11) **EP 2 410 939 B1**
(45) Veröffentlichungstag und Bekanntmachung des Hinweises auf die Patenterteilung: **24.01.2018**
(21) Anmeldenummer: 10711875.4
(22) Anmeldetag: 24.03.2010
(51) Int. Cl.: A61C 8/00

(54) **GINGIVAFORMER UND VERFAHREN ZUR HERSTELLUNG EINER KONSTRUKTION EINES GINGIVAFORMERS**
GINGIVA FORMER AND METHOD FOR PRODUCING A DESIGN OF A GINGIVA FORMER
DISPOSITIF DE FAÇONNAGE DE GENCIVE ET PROCÉDÉ DE FABRICATION DE LA STRUCTURE D'UN DISPOSITIF DE FAÇONNAGE DE GENCIVE

(30) Priorität: 24.03.2009 DE 102009001782
(43) Veröffentlichungstag der Anmeldung: 01.02.2012
(73) Patentinhaber: Sirona Dental Systems GmbH, 64625 Bensheim (DE)
(72) Erfinder: SCHNEIDER, Sascha, 64367 Mühltal (DE)
(74) Vertreter: Sommer, Peter
(86) Internationale Anmeldenummer: PCT/EP2010/053803
(87) Internationale Veröffentlichungsnummer: WO 2010/108935

(56) Entgegenhaltungen:
- JP-A- 2007 075 532
- US-A- 5 873 721
- US-A1- 2004 121 286
- US-A1- 2006 105 296
- US-A1- 2007 037 122
- US-B1- 6 788 986

## Beschreibung

### Technisches Gebiet

Die Erfindung betrifft einen Gingivaformer und ein Verfahren zur Bereitstellung einer Konstruktion eines Gingivaformers, wobei der Gingivaformer temporär während einer Heilungsphase eines Implantats statt einer individualisierten finalen Implantatversorgung am Implantat befestigt wird. Mit Hilfe des Gingivaformers wird das Zahnfleisch im Präparationsgebiet während der Einheilphase des Implantats in eine gewünschte Form gebracht. Dabei ist es wichtig, dass das Zahnfleisch von der Schulter des gesetzten Implantats ausgehend bis zu seinem Rand eine Form annimmt, die die finale Implantatversorgung ohne Lücken oder Druckstellen aufnehmen kann und eine Gingivalinie auf der finalen Implantatversorgung ausbildet, also eine Durchbruchslinie der Versorgung durch das Zahnfleisch, die mit der Gingivalinie an den die Versorgung umgebenden Zähnen übereinstimmt. Dies ist vor allem im Bereich der vorderen Zähne unter ästhetischen Gesichtspunkten wünschenswert.

### Stand der Technik

Bisher wird auf ein frisch gesetztes Implantat üblicherweise ein Gingivaformer mit einer standardisierten Geometrie geschraubt, wo er während der Einheilphase des Implantats verbleibt. Unter Geometrie wird hier die äußere Form verstanden.

Der Gingivaformer hat die Aufgabe das Zahnfleisch möglichst so zu formen, dass sich nach Einsetzen der finalen Implantatversorgung, ein gewünschtes Emergenzprofil ausbildet, also eine zum restlichen Gebiss passende Form des Zahnfleisches oberhalb des Implantats.

Aus der DE 20 2007 005 474 U1 ist bekannt, dass ein Gingivaformer aus PEEK mechanisch leicht anpassbar und individualisierbar ist. Individualisiert wird in erster Linie die Farbe des Gingivaformers, die der Farbe des Zahnfleisches des Patienten angepasst wird und den Gingivaformer damit ästhetisch ansprechender aussehen lässt. Es wird aber auch gelehrt, dass der okkusale Teil des Gingivaformers abgewinkelt ausgebildet sein kann, um eine für eine jeweilige Einsetzrichtung notwendige Korrektur der Dentalimplantatachse zu erreichen und dass der Umfang des zylindrischen Bereichs des Gingivaformers an die räumlichen Gegebenheiten der Zahnstellung angeglichen werden kann. Dadurch wird das Zahnfleisch während des Einheilens so geformt, dass zumindest die Achse und der Umfang des sich ausbildenden Zylinders in etwa der Achse und dem Umfang des später eingesetzten Zahnersatzes im Bereich des Zahnfleisches entsprechen.

Auch die EP 2 011 448 A1 offenbart einen Gingivaformer, der die Mundschleimhaut im Implantatbereich während der Ausheilung in ihrer Form und Lage für die später anzubringende prothetische Versorgung konditioniert, indem die Form und die räumliche Lage von Konditionierflächen des Ginigvaformers möglichst exakt mit der der prothetischen Versorgung im Übergangsbereich zum Implantat übereinstimmen. Dazu wird die Kontur der Konditionierfläche an die Neigung der zentralen Achse der prothetischen Versorgung angepasst. Weiterhin können die Konditionierflächen bereichsweise mit Wölbungen versehen werden können, um möglichst exakt der Form der prothetischen Versorgung zu entsprechend.

Aus "das dental labor", Ausgabe 4/2008, Seiten 441-450, ist weiterhin bekannt, dass eine direkte Übernahme einer händisch erzeugten individuellen Form eines Gingivaformers für eine spätere Endversorgung nur möglich ist, sofern die Endversorgung ebenfalls händisch erzeugt wird.

Es wäre auch möglich den Verlauf des Zahnfleisches zum Implantat hin nach der Entnahme des Gingivaformers direkt zu vermessen und diese Daten dann für eine finale Implantatversorgung zu übernehmen. Da das Zahnfleisch allerdings nur schlecht optisch gescannt werden kann, ist die zu erreichende Genauigkeit der Übereinstimmung der sich aufgrund des Gingivaformers ausgebildeten Form des Zahnfleisches mit der Form der finalen Implantatversorgung unbefriedigend. Aus der DE 103 00 301 A1 ist eine weitere Möglichkeit bekannt, ein Implantat nach dem Setzen zu versorgen. Statt eines Gingivaformers kann eine automatisch erzeugte Suprastruktur aus einem finalen Abutment und einer Reduzierkrone am Implantat befestigt werden, wobei eine Reduzierkrone eine Krone mit einer reduzierten Größe ist, die außerhalb der Okklusion des gegenüberliegenden Zahns liegt. Dadurch erfährt die Reduzierkrone keine Krafteinwirkung außer einer Restkraft beim Kauen, so dass das Implantat nicht belastet wird. Aufgrund des digitalen Erstellens der Suprastruktur ist es sehr einfach möglich, erst die tatsächlich notwendige und funktional korrekte Krone zu konstruieren und diese dann rechnerisch so zu reduzieren, dass sie sicher außerhalb der Okklusion liegt.

US5873721 und US2006/0105296 stellen auch Gingivaformer und Abutments dar.

Da hierbei das finale Abutment auf das Implantat aufgebracht wird, kann das Zahnfleisch im Bereich zum Implantat hin gleich seine Endform ausbilden und auch der Rand, also die Durchbrechung der Reduzierkrone durch das Zahnfleisch, wird dem sich ausbildenden Emergenzprofil für die finale Implantatversorgung schon sehr ähnlich sein.

Der Nachteil dieser Vorgehensweise ist allerdings, dass im Gegensatz zu einer gedeckten Einheilung das Zahnfleisch nur an das die Erstversorgung, also das finale Abutment und die Reduzierkrone, heranwachsen kann und dadurch die Gefahr von Infektionen durch unerwünschte Fremdkörper, die zwischen Zahnfleisch und Erstversorgung gelangen können, besteht. Die Aufgabe der Erfindung besteht darin, einen Gingivaformer und ein Verfahren zur Bereitstellung einer Konstruktion eines Gingivaformers bereitzustellen, wobei der Gingivaformer die genannten Probleme löst.

### Darstellung der Erfindung

Die Erfindung ist ein Gingivaformer und ein finales Abutment gemäß Anspruch 1, und ein Verfahren gemäß Anspruch 5.

Der erfindungsmäßige Gingivaformer mit einer Anschlussgeometrie an ein Implantat weist einen individualisierten Rand auf. Ein unterhalb liegendes sich verjüngendes Unterteil hat ebenfalls eine individualisierte Form, wobei der Rand des Gingivaformers und das darunter liegende Unterteil in ihrer Form einem individualisierten finalen Abutment entsprechen. Ein sich verjüngendes Oberteil weist eine Mantelfläche auf, die einen Neigungswinkel mit einer Längsachse der Anschlussgeometrie zwischen 0,5° und 30° einschließt. Die Individualisierung des Randes und des darunter liegenden Unterteils des Gingivaformers ermöglicht es, durch Aufbringen eines solchen erfindungsmäßigen Gingivaformers auf ein gesetztes Implantat das Zahnfleisch im Bereich des Implantats auf eine individualisierte finale Implantatversorgung vorzubereiten. Dadurch, dass der Gingivaformer im Bereich des Randes und des Unterteils genau so ausgebildet ist wie das finale Abutment, wird das Zahnfleisch um den auf eine gesetztes Implantat aufgebrachten Gingivaformer schon während der Einheilphase die Form des finalen Abutments annehmen, so dass nach Entnehmen des Gingivaformers und Einsetzen des finalen Abutments keinerlei Druckstellen oder Lücken auftreten.

Der Verlauf des Randes und die Form des Unterteils sind so ausgebildet, dass sich das Zahnfleisch schon während der Einheilphase des Implantats so ausbilden kann, dass ein Emergenzprofil entsteht - also der Verlauf des Zahnfleisches von der Implantatschulter bis hin zur Durchbruchslinie des Gingivaformers durch das Zahnfleisch, der so genannten Gingivalinie - welches dem der umgebenden Zähne entspricht, um so ein ästhetisch möglichst ansprechendes Ergebnis zu erlangen. Der Verlauf des Randes, sowie die Form des Unterteils können dann direkt für die finale Implantatversorgung übernommen werden, so dass das finale Emergenzprofil mit dem Emergenzprofil des Gingivaformers weitestgehend übereinstimmt.

Durch die individualisierte Form wird auch die individuelle Zahnfleischhöhe über dem Kieferknochen eines Patienten berücksichtigt. So beginnt durch die individualisierte Form des Unterteils und des Randes das Oberteil des erfindungsmäßigen Gingivaformers nach dem Aufbringen des Gingivaformers auf ein schon gesetztes Implantat genau auf Höhe der Gingivalinie, also der Durchbruchlinie des Gingivaformers durch das Zahnfleisch, oder sogar schon unterhalb der Gingivalinie. Dadurch, dass das Oberteil von Zahnfleisch umgeben ist oder direkt an den Zahnfleischrand angrenzt und seine Form sich verjüngt, ist es möglich, dass sich Zahnfleisch während der Einheilphase auch über den Rand des Gingivaformers hinaus bildet, der Gingivaformer also am Rand einwächst. Während der Einheilphase ist üblicherweise ein Rückgang des Zahnfleisches von 0,5mm bis 1mm zu beobachten, dem durch die sich verjüngende Form des Oberteils entgegengewirkt wird. Dadurch entsteht nach Herausnehmen des Gingivaformers und Einsetzten einer finalen Implantatversorgung ein leichter Überschuss an Zahnfleisch um die finale Implantatversorgung herum, der für das Einheilen der finalen Implantatversorgung vorteilhaft sein kann. Dabei ist dafür Sorge zu tragen, dass dieser Überschuss den Verlauf der Gingivalinie nicht zu sehr verschiebt, damit diese noch mit der Gingivalinie der übrigen Zähne übereinstimmt. Dies kann durch den Neigungswinkel des Oberteils des erfindungsmäßigen Gingivaformers gesteuert werden.

Vorteilhafterweise hat die Mantelfläche des sich verjüngenden Oberteils einen in Richtung der Längsachse geradlinigen Verlauf mit einer konstanten Steigung.

Dadurch ist es möglich, dass nach aufbringen des Gingivaformers auf ein gesetztes Implantat Zahnfleisch im Bereich oberhalb des Randes des Gingivaformers nur teilweise über diesen Rand hinauswachsen kann. So steht nach dem Entfernen des Gingivaformers und dem Einsetzen der finalen Implantatversorgung ein geeigneter, nicht zu großer Überschuss an Zahnfleisch zur Verfügung, der das Einheilen der finalen Implantatversorgung begünstigt und eine zu den übrigen Zähnen passende Gingivalinie auf der finalen Implantatversorgung ausbildet.

Vorteilhafterweise ist der Gingivaformer aus Material auf Kunststoffbasis gefertigt.

Da Materialien auf Kunststoffbasis Plaque-freundlich und daher gingivaaufbauend wirken, wird der Heilungsprozess des Zahnfleisches beschleunigt. Da es sich bei einem Gingivaformer um eine provisorische, also temporäre Versorgung handelt, muss das verwendete Material nicht notwendigerweise die Festigkeit aufweisen, die ein finales Abutment oder eine finale Implantatversorgung aufweisen muss. Vielmehr ist bei der Wahl des Materials wichtig, dass es möglichst leicht und schnell zu bearbeiten, sowie eher kostengünstig ist.

Als einen weiteren Gegenstand umfasst die Erfindung ein Verfahren zur Bereitstellung einer Konstruktion eines Gingivaformers mit einer Anschlussgeometrie an ein Implantat, wobei mittels einer Konstruktions-Software im Rahmen einer Implantatversorgungsplanung eine Geometrie eines individualisierten finalen Abutments als 3D-Datensatz zumindest in einem die Anschlussgeometrie umfassenden Bereich unterhalb eines Randes des finalen Abutments bereitgestellt ist. Für die Geometrie des Gingivaformers im Bereich unterhalb des Randes und für die Geometrie des Randes selbst wird die Geometrie des finalen Abutments verwendet. Der Gingivaformer im Bereich oberhalb des Randes wird sich verjüngen ausgebildet, wobei ein Neigungswinkel einer Aussenfläche des Oberteils gegenüber der Längsachse der Anschlussgeometrie zwischen 0,5° und 30° gewählt wird.

Durch das Verwenden der zumindest in einem die Anschlussgeometrie umfassenden Bereich bereitgestellten Geometrie des finalen Abutments, die als 3D-Datensatz vorhanden ist, ist kein zusätzlicher Verfahrensschritt nötig, die Form des Gingivaformers in diesem Bereich zu konstruieren. Lediglich die Form des Gingivaformers im Bereich des Oberteils bedarf eines zusätzlichen Konstruktionsschrittes.

Durch das Verwenden der Form des finalen Abutments für den Gingivaformer im Bereich des Unterteils und des Randes kann das Zahnfleisch schon während der Einheilphase des Implantats ein Emergenzprofil ausbilden, welches dem final gewünschten Emergenzprofil möglichst entspricht und an das Emergenzprofil der die finale Versorgung umgebenden Zähne angepasst ist.

Es ist so auch möglich, Korrekturen am Emergenzprofil vorzunehmen, sollte sich dieses nicht in der gewünschten Form ausbilden und die Gingivalinie von der Gingivalinie an den das Implantat umgebenden Zähnen abweichen. Dazu können entsprechende Änderungen an der als 3D-Datensatz vorliegenden Form vorgenommen werden und entweder ein weiterer Gingivaformer mit der entsprechend geänderten Form hergestellt und eingesetzt werden oder zumindest die geänderte Form des 3D-Datensatzes im Rahmen einer Implantatversorgungsplanung übernommen werden.

Vorteilhafterweise wird der Gingivaformer computerunterstützt konstruiert und maschinell hergestellt wird.

Durch die Verwendung eines CAD/CAM Systems ist es möglich, die Geometrie des Gingivaformers computergestützt zu entwerfen, maschinell herzustellen oder die Daten zur maschinellen Herstellung zu übermitteln. Außerdem kann eine finale Implantatversorgung direkt aus dem 3D-Datensatz des erfindungsgemäßen Gingivaformers weiterentwickelt werden oder aber eine finale Implantatversorgung entworfen werden, deren unterer Bereich dann direkt übernommen und durch ein entsprechendes Oberteil zu einem erfindungsgemäßen Gingivaformer ergänzt werden kann. Die Bestimmung der Gingivalinie kann auf diese Weise an einem virtuellen Modell des Präparationsgebietes mit dem Implantat vorgenommen werden und genau in der Geometrie des Gingivaformers und der finalen Implantatversorgung berücksichtigt werden. Ein Bestimmen der Gingivalinie an einem klassischen oder an einem virtuellen Modell ist aus "das dental labor", Ausgabe 4/2008, Seiten 441-450, bekannt. Der Verlauf der Gingivalinie wird jedoch in traditioneller Technik händisch auf die provisorische Versorgung übertragen, was zu Ungenauigkeiten führt.

Durch die computergestützte Konstruktion der Geometrie des Gingivaformers und die Weiterverwendung des dabei erzeugten 3D-Datensatzes für die individualisierte finalen Implantatversorgung, sowie die maschinelle Herstellung von Gingivaformer und finaler Implantatversorgung wird eine hohe Genauigkeit der Übereinstimmung der Form des Gingivaformers mit der Form des finalen Abutments möglich, so dass auch das finale Emergenzprofil dem durch den Gingivaformer ausgebildeten Emergenzprofil möglichst genau entspricht.

Weiterhin wird bei entsprechend vorhandener Ausrüstung das schnelle Herstellen des Gingivaformers durch den Behandler möglich.

Vorteilhafterweise wird die Geometrie des individualisierten Gingivaformers während einer Einheilphase schrittweise verändert und der individualisierte Gingivaformer mit der veränderten Geometrie jeweils hergestellt und eingesetzt.

Dadurch kann das Zahnfleisch im Bereich eines gesetzten Implantats auch schrittweise der Form der finalen Versorgung angepasst werden.

Vorteilhafterweise entspricht der Rand des Gingivaformers genau der Gingivalinie der individualisierten finalen Implantatversorgung durch das Zahnfleisch oder ist zu dieser Gingivalinie so beabstandet ist, dass das Zahnfleisch noch über den Rand des Gingivaformers hinaus geht.

Dadurch wird erreicht, dass das Zahnfleisch während der Einheilphase im Randbereich des Gingivaformers über diesem zusammenwächst. Der dadurch entstehende Zahnfleischüberschuss nach Herausnehmen des Gingivaformers und Einsetzen einer individualisierten finalen Implantatversorgung unterstützt den Einheilprozess.

Vorteilhafterweise wird für die Geometrie des Gingivaformers im Bereich unterhalb des Randes und für die Geometrie des Randes selbst die Geometrie einer finalen Implantatversorgung verwendet, wobei die finale Implantatversorgung einteilig oder mehrteilig sein kann.

### Kurzbeschreibung der Zeichnung

Ein Ausführungsbeispiel der Erfindung ist in der Zeichnung dargestellt. Es zeigt die
- Fig. 1: einen erfindungsmäßigen individualisierten Gingivaformer, die
- Fig. 2: den auf ein bereits gesetztes Implantat aufgebrachte erfindungsmäßige Gingivaformer aus Fig. 1, die
- Fig. 3: den auf ein Implantat aufgebrachten und eingeheilten erfindungsmäßigen Gingivaformer aus Fig. 1.

### Ausführungsbeispiel

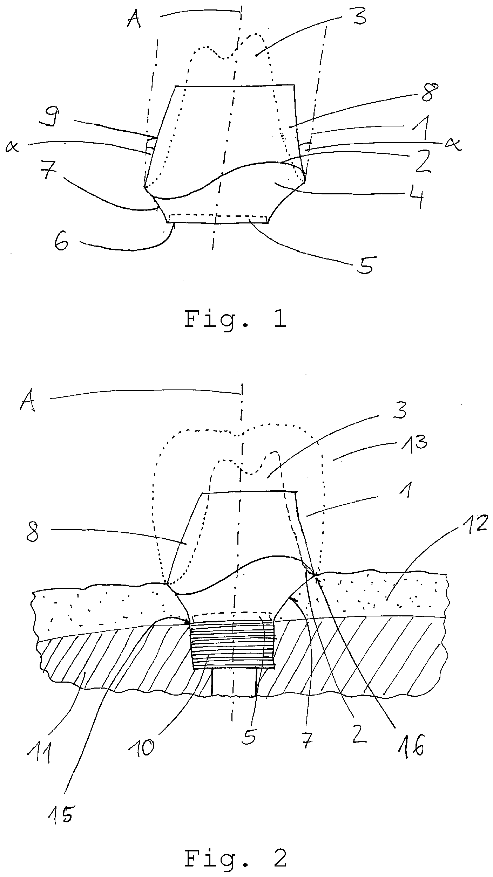

Fig. 1 zeigt einen erfindungsgemäßen individualisierten Gingivaformer 1. Er weist einen individualisierten Rand 2 auf, der einem Rand eines individualisierten finalen Abutments 3 entspricht, das gestrichelt dargestellt ist.

Ein unterhalb des Randes 2 liegendes Unterteil 4 weist eine Anschlussgeometrie 5 an ein in Fig. 2 dargestelltes Implantat 10 auf, die eine untere Anschlussfläche 6 und innere Anschlussflächen umfasst. Das Unterteil 4 weist weiterhin zwischen der Anschlussgeometrie 5 und dem individualisierten Rand 2 eine ebenfalls individualisierte Aussenfläche 7 auf, die der Aussenfläche des individualisierten finalen Abutments 3 im Bereich unterhalb des Randes 3 entspricht.

Dadurch entspricht der untere Teil des Gingivaformers genau der Geometrie des finalen Abutments 3.

Ein oberhalb des Randes 2 liegendes Oberteil 8 des Gingivaformers 1 ist sich verjüngend ausgebildet, wobei eine Mantelfläche 9 des Oberteils 8 mit einer Längsachse A der Anschlussgeometrie 5 an jeder Stelle einen Neigungswinkel α zwischen 0,5° und 30° einschliesst. Im Bereich oberhalb des Randes 2 unterscheidet sich die Form des Gingivaformers 2 damit von der Form des finalen Abutments 3. Während das finale Abutment 3 eine Schulter, also eine Wölbung zur Längsachse A der Anschlussgeometrie hin aufweist, verläuft die Mantelfläche 9 des Gingivaformers 1 in Richtung der Längsachse A im Ausführungsbeispiel geradlinig und mit einer konstanten Steigung.

In einem für einen individuellen Patienten schematisch dargestellten Präparationsgebiet nach Fig. 2 ist der am Implantat 10, welches in einen Kierferknochen 11 eingebracht ist, befestigte Gingivaformer 1 dargestellt, wobei die Anschlussgeometrie 5 des Implantats 10 in diesem Ausführungsbeispiel entlang der Längsachse A der Anschlussgeometrie nach oben über den Kierferknochen 11 übersteht. Der untere Teil des Gingivaformers 1, umfassend die Anschlussgeometrie 5, die Aussenfläche 7 und den Rand 2, wird von Zahnfleisch 12 umgeben. Das Zahnfleisch 12 kann so nach dem Einsetzen des Gingivaformers 1 eine Form ausbilden, die der des später einzusetzenden individualisierten finalen Abutments 3 entspricht.

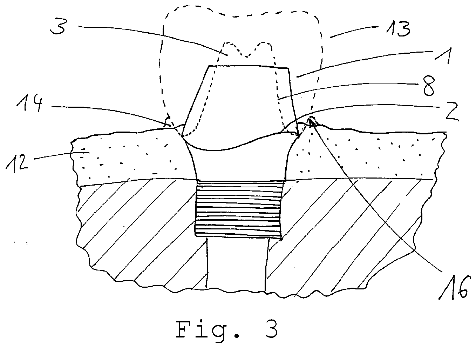

Auch das sich ausbildende Emergenzprofil, also die Fläche zwischen der Implantatschulter 15 und der Gingivalinie 16 der finalen Implantatversorgung bildet sich so aus, dass es weitestgehend mit dem finalen Emergenzprofil entspricht. Nur im Bereich der Gingivalinie 16 wird durch die sich verjüngende Geometrie des Oberteils des Gingivaformers 1 eine leichte Abweichungen des Emergenzprofils für den Gingivaformer vom finalen Emergenzprofil erzeugt. Die Gingivalinie 16 stimmt beim Einsetzen des Gingivaformers entweder genau mit dem Verlauf des Randes 2 überein, wie in Fig. 2 dargestellt, oder sie verläuft oberhalb des Randes 2 des Gingivaformers 1, wie in Fig. 3 dargestellt. Die sich verjüngende Geometrie des Oberteils 8 des Gingivaformers 1 ermöglicht dann, dass das Zahnfleisch während der Einheilphase von der Seite her über den Rand 2 des Gingivaformers 1 hinauswachsen kann.

Während also im Bereich des Unterteils 4 die Form des Zahnfleisches 12 nach Herausnehmen des Gingivaformers 1 der Form des einzusetzenden finalen Abutments 3 entspricht, entsteht durch die Verjüngung im Bereich oberhalb des Randes 2 eine Form des Zahnfleisches 12, die nach Herausnehmen des Gingivaformers 1 und Einsetzen einer Implantatversorgung 13 rings um die Implantatversorgung 13 oberhalb des Randes 2 zu einem abweichenden Emergenzprofil, nämlich zu einem Überschuss 14 an Zahnfleisch 12 führt.

### Bezugszeichenliste

- 1: individualisierter Gingivaformer
- 2: Rand
- 3: finales Abutment
- 4: Unterteil
- 5: Anschlussgeometrie
- 6: untere Anschlussfläche
- 7: Aussenfläche
- 8: Oberteil
- 9: Mantelfläche
- 10: Implantat
- 11: Kieferknochen
- 12: Zahnfleisch
- 13: finale Implantatversorgung
- 14: Überschuss an Zahnfleisch 12
- 15: Implantatschulter
- 16: Gingivalinie
- A: Längsachse der Anschlussgeometrie
- α: Neigungswinkel

## Patentansprüche

1. Gingivaformer (1) und finales Abutment, jeweils mit einer Anschlussgeometrie (5) an ein Implantat (10), wobei das finale Abutment für ein Präparationsgebiet eines individuellen Patienten individualisiert ist und ein 3D-Datensatz des finalen Abutments zumindest in einem die Anschlussgeometrie (5) umfassenden Bereich unterhalb eines Randes des finalen Abutments vorliegt, **dadurch gekennzeichnet, dass** der Gingivaformer (1) einen individualisierten Rand (2) und ein unterhalb liegendes sich verjüngendes Unterteil (4) mit einer individualisierten Form und ein sich verjüngendes Oberteil (8) mit einer Mantelfläche (9) aufweist, wobei der Rand (2) des Gingivaformers (1) und das darunter liegende Unterteil (4) in ihrer Form dem 3D-Datensatz des finalen Abutments (3) entsprechen und wobei die Mantelfläche (9) einen Neigungswinkel (α) gegenüber einer Längsachse (A) der Anschlussgeometrie (5) zwischen 0,5° und 30° aufweist.

2. Gingivaformer (1) und finales Abutment nach Anspruch 1, **dadurch gekennzeichnet, dass** die Mantelfläche (9) des sich verjüngenden Oberteils (8) einen in Richtung der Längsachse (A) geradlinigen Verlauf mit einer konstanten Steigung aufweist.

3. Gingivaformer (1) und finales Abutment nach Anspruch 1 oder 2, **dadurch gekennzeichnet, dass** der Gingivaformer (1) aus Material auf Kunststoffbasis ist.

4. Gingivaformer und finales Abutment nach einem der Ansprüche 1 bis 3, **dadurch gekennzeichnet, dass** der Rand (2) des Gingivaformers (1) genau der Gingivalinie (16) der finalen Implantatversorgung (13) entspricht oder dass der Rand (2) zu dieser Gingivalinie (16) so beabstandet ist, dass die Gingivalinie (16) oberhalb des Randes (2) verläuft.

5. Verfahren zur Bereitstellung einer Konstruktion eines Gingivaformers (1) mit einer Anschlussgeometrie (5) an ein Implantat (10), wobei mittels einer Konstruktions-Software im Rahmen einer Implantatversorgungsplanung eine Geometrie eines individualisierten finalen Abutments (3) als 3D-Datensatz zumindest in einem die Anschlussgeometrie (5) umfassenden Bereich unterhalb eines Randes des finalen Abutments bereitgestellt ist, wobei das finale Abutment für ein Präparationsgebiet eines individuellen Patienten individualisiert ist, **dadurch gekennzeichnet, dass** der Gingivaformer (1) computerunterstützt konstruiert und maschinell hergestellt wird, wobei für die Geometrie des Gingivaformers (1) im Bereich unterhalb eines Randes (2) und für die Geometrie des Randes (2) selbst die als 3D-Datensatz vorliegende Geometrie des finalen Abutments (3) verwendet wird und dass der Gingivaformer (1) im Bereich oberhalb des Randes (2) sich verjüngend ausgebildet wird, wobei ein Neigungswinkel (α) einer Mantelfläche 9 des Oberteils (8) gegenüber der Längsachse (A) der Anschlussgeometrie (5) zwischen 0,5° und 30° gewählt wird.

6. Verfahren nach Anspruch 5, **dadurch gekennzeichnet, dass** die Geometrie des individualisierten Gingivaformers (1) schrittweise verändert und der individualisierte Gingivaformer (1) mit der veränderten Geometrie hergestellt wird.

## Claims

1. A gingiva former (1) and a final abutment, each having a connecting geometry (5) to an implant (10), wherein the final abutment is individualized for a preparation region of an individual patient, and a 3-D dataset of the final abutment at least in a region encompassing the connecting geometry (5) beneath an edge of the final abutment is provided, **characterized in that** the gingiva former (1) comprises an individualized edge (2) and a tapering lower part (4) lying therebeneath with an individualized shape and a tapering upper part (8) with a lateral surface (9), wherein the edge (2) of the gingiva former (1) and the lower part (4) lying therebeneath correspond in their shape to the 3-D dataset of the final abutment (3) and wherein the lateral surface (9) has an inclination angle (α) relative to a longitudinal axis (A) of the connecting geometry (5) of between 0.5° and 30°.

2. The gingiva former (1) and the final abutment as claimed in claim 1, **characterized in that** the lateral surface (9) of the tapering upper part (8) has a straight-line form with a constant inclination in the direction of the longitudinal axis (A).

3. The gingiva former (1) and the final abutment as claimed in claim 1 or 2, **characterized in that** the gingiva former (1) is made of a plastics-based material.

4. The gingiva former and the final abutment as claimed in one of the claims 1 to 3, **characterized in that** the edge (2) of the gingiva former (1) corresponds exactly to the gingival line (16) of the final implant provision (13) or that the edge (2) is spaced from this gingival line (16) such that the gingival line (16) extends above the edge (2).

5. A method for preparing a design of a gingiva former (1) with a connecting geometry (5) to an implant (10) wherein, by means of a design software, in the context of an implant provision planning, a geometry of an individualized final abutment (3) is prepared as a 3-D dataset at least in a region encompassing the connecting geometry (5) below an edge of the final abutment, wherein the final abutment is individualized for a preparation region of an individual patient, **characterized in that** the gingiva former (1) is designed in a computer-aided manner and machine-manufactured, wherein for the geometry of the gingiva former (1) in the region beneath an edge (2) and for the geometry of the edge (2) itself, the geometry of the final abutment (3) present as a 3-D dataset is used and **in that** the gingiva former (1) is configured tapering in the region above the edge (2), wherein an inclination angle (α) of a lateral surface (9) of the upper part (8) relative to the longitudinal axis (A) of the connecting geometry (5) is selected to be between 0.5° and 30°.

6. The method as claimed in claim 5, **characterized in that** the geometry of the individualized gingiva former (1) is altered step-wise and the individualized gingiva former (1) is manufactured with the altered geometry.

## Revendications

1. Dispositif de façonnage de gencive (1) et pilier final, présentant chacun une géométrie de raccordement (5) sur un implant (10), ledit pilier final étant individualisé pour une zone de préparation d'un patient individuel et un ensemble de données 3D du pilier final étant disponible au moins dans une zone comprenant la géométrie de raccordement (5) et située sous un bord du pilier final, **caractérisés en ce que** le dispositif de façonnage de gencive (1) présente un bord individualisé (2) et une partie inférieure (4) effilée, située au-dessous et qui présente une forme individualisée, ainsi qu'une partie supérieure (8) effilée qui présente une surface d'enveloppe (9), le bord (2) du dispositif de façonnage de gencive (1) et la partie inférieure (4) située au-dessous correspondant, de par leur forme, à l'ensemble de données 3D du pilier final (3) et la surface d'enveloppe (9) présentant un angle d'inclinaison (α) compris entre 0,5 ° et 30 ° par rapport à un axe longitudinal (A) de la géométrie de raccordement (5).

2. Dispositif de façonnage de gencive (1) et pilier final selon la revendication 1, **caractérisés en ce que** la surface d'enveloppe (9) de la partie supérieure (8) effilée présente un profil rectiligne dans le sens de l'axe longitudinal (A), avec une pente constante.

3. Dispositif de façonnage de gencive (1) et pilier final selon la revendication 1 ou 2, **caractérisés en ce que** le dispositif de façonnage de gencive (1) se compose d'un matériau à base de plastique.

4. Dispositif de façonnage de gencive et pilier final selon l'une des revendications 1 à 3, **caractérisés en ce que** le bord (2) du dispositif de façonnage de gencive (1) correspond exactement à la ligne gingivale (16) de l'implant posé final (13) ou **en ce que** le bord (2) est écarté de ladite ligne gingivale (16) de telle sorte que la ligne gingivale (16) s'étende au-dessus du bord (2).

5. Procédé de mise à disposition d'une conception d'un dispositif de façonnage de gencive (1) présentant une géométrie de raccordement (5) sur un implant (10), dans lequel, dans le cadre de la planification de la pose d'un implant, on fournit, au moyen d'un logiciel de conception, une géométrie d'un pilier final (3) individualisé, sous la forme d'un ensemble de données 3D, au moins dans une zone comprenant la géométrie de raccordement (5) et située au-dessous d'un bord du pilier final, le pilier final étant individualisé pour une zone de préparation d'un patient individuel, **caractérisé en ce que** le dispositif de façonnage de gencive (1) est conçu de manière assistée par ordinateur et est produit à la machine et dans lequel on utilise la géométrie du piler final (3) disponible sous la forme de l'ensemble de données 3D pour la géométrie du dispositif de façonnage de gencive (1) dans la zone située au-dessous d'un bord (2) ainsi que pour la géométrie du bord (2) lui-même et **en ce que** le dispositif de façonnage de gencive (1) est conçu en s'effilant dans la zone située au-dessus du bord (2), un angle d'inclinaison (α) d'une surface d'enveloppe (9) de la partie supérieure (8) par rapport à l'axe longitudinal (A) de la géométrie de raccordement (5) étant choisi pour se trouver entre 0,5 ° et 30 °.

6. Procédé selon la revendication 5, **caractérisé en ce que** la géométrie du dispositif de façonnage de gencive (1) individualisé est modifiée progressivement et le dispositif de façonnage de gencive (1) individualisé est produit avec cette géométrie modifiée.
